# FASCICULE DE BREVET EUROPEEN

(11) **EP 4 107 406 B1**
(45) Date de publication et mention de la délivrance du brevet: **24.04.2024**
(21) Numéro de dépôt: 21732376.5
(22) Date de dépôt: 25.03.2021
(51) Int. Cl.: F16D 55/226, F16D 65/18

(54) **MÉCANISME À LIAISON HÉLICOÏDALE POUR PISTON D'ÉTRIER DE FREIN ÉLECTROMÉCANIQUE À MONTAGE SIMPLIFIEÉ ET PROCÉDÉ DE FABRICATION D'UN TEL MÉCANISME**
SCHRAUBVERBINDUNGSMECHANISMUS FÜR ELEKTROMECHANISCHEN BREMSSATTELKOLBEN MIT VEREINFACHTER MONTAGE UND VERFAHREN ZUR HERSTELLUNG EINES SOLCHEN MECHANISMUS
HELICAL CONNECTION MECHANISM FOR ELECTROMECHANICAL BRAKE CALIPER PISTON WITH SIMPLIFIED MOUNTING AND METHOD OF MANUFACTURING SUCH A MECHANISM

(30) Priorité: 02.04.2020 FR 2003307
(43) Date de publication de la demande: 28.12.2022
(73) Titulaire: Hitachi Astemo France, 93700 Drancy (FR)
(72) Inventeur: BERTRAND, Jérôme, 93230 Romainville (FR); UMBDENSTOCK, Fabrice, 75011 Paris (FR)
(74) Mandataire: Brevalex
(86) Numéro de dépôt international: PCT/FR2021/050519
(87) Numéro de publication internationale: WO 2021/198595

(56) Documents cités:
- EP-A1- 0 062 567
- WO-A1-2018/104649
- DE-A1-102018 213 850
- FR-A1- 3 057 638
- FR-A1- 3 069 297
- KR-A- 20130 058 263

## Description

### DOMAINE TECHNIQUE

L'invention se rapporte à un mécanisme à liaison hélicoïdale pour piston équipant un étrier de frein à disque à actionneur électromécanique.

### ÉTAT DE LA TECHNIQUE ANTÉRIEURE

Un frein à disque électromécanique (voir par exemple le document FR 3 057 638 A1) comprend un étrier chevauchant un disque de freinage, cet étrier comportant un corps d'étrier qui porte deux plaquettes de part et d'autre du disque et qui est équipé d'un actionneur électromécanique pour presser ces plaquettes contre le disque lorsqu'il est activé, afin de générer un couple de freinage.

Le corps d'étrier comporte un logement cylindrique s'étendant entre l'actionneur et l'une des plaquettes, dans lequel coulisse un piston mobile ayant sa tête en appui sur cette plaquette. L'actionneur comporte un arbre de sortie accouplé à un entraîneur ou organe d'entraînement faisant partie d'une liaison de type hélicoïdale située dans le logement cylindrique et en partie dans le piston, pour être interposée entre l'actionneur et la tête du piston.

Lorsque l'actionneur est activé, il exerce un couple via son arbre de sortie, qui est transformé en effort presseur par un mécanisme à liaison hélicoïdale, pour que le piston presse la plaquette sur le disque. L'étrier est généralement monté flottant selon la direction axiale du disque, de sorte que l'effort presseur exercé par un seul piston suffit à presser les deux plaquettes opposées contre le disque.

Dans un tel système, la liaison hélicoïdale est irréversible : un effort exercé sur le piston ne se traduit pas par l'exercice d'un couple par la vis d'entraînement. Cette liaison comporte une douille dans laquelle l'organe d'entraînement est vissé, logée dans le piston et liée à celui-ci par une liaison de type prismatique, c'est-à-dire permettant à la douille de coulisser longitudinalement dans le piston mais interdisant sa rotation par rapport à celui-ci. Le piston coulisse dans son logement tout en étant bloqué en rotation par rapport au corps d'étrier.

La liaison prismatique est réalisé au moyen d'un plateau solidarisé à la douille et s'étendant transversalement par rapport à l'axe de la douille et comportant sur sa périphérie extérieure des encoches qui coopèrent avec des nervures longitudinales formées sur la surface intérieure du piston.

Lorsque l'actionneur est activé, ce qui correspond généralement à une commande de frein de parc, la douille en appui contre une face interne de la tête du piston pousse celui-ci vers le disque. De manière indépendante, une mise en pression du logement du piston, correspondant généralement à une commande de frein de service, permet elle aussi de presser ce piston vers le disque.

Or, lors de l'assemblage du frein, en particulier du montage du mécanisme à liaison hélicoïdale, celui-ci peut se mettre de travers par rapport à l'axe longitudinal, ce qui complexifie la suite de l'assemblage notamment la connexion entre l'organe d'entraînement et le moteur électrique.

### EXPOSÉ DE L'INVENTION

C'est par conséquent un but de la présente invention d'offrir un mécanisme à liaison hélicoïdale pour piston d'étrier de frein à disque électromécanique facilitant l'assemblage du frein.

Le but énoncé ci-dessus est atteint par un mécanisme à liaison hélicoïdale de piston d'étrier de frein à disque électromécanique comportant une douille et un organe d'entraînement coopérant l'un avec l'autre par une liaison hélicoïdale, et des moyens d'arrêt en rotation de la douille dans le piston, lesdits moyens d'arrêt assurant également un maintien de la douille et de l'organe d'entraînement dans une position coaxiale au piston.

Dans un exemple de réalisation, les moyens d'arrêt en rotation et de maintien axial comportent un plateau fixé sur la douille et des extensions axiales conformées pour coopérer avec la surface intérieure du piston et assurer à la fois le blocage en rotation de la douille par rapport au piston et son alignement avec l'axe du piston.

Selon l'invention, les moyens d'arrêt en rotation et de maintien axial comportent un plateau fixé sur la douille et des extensions axiales conformées pour coopérer avec la surface intérieure du piston et assurer à son alignement avec l'axe du piston et au moins une forme coopérant avec la surface intérieure du piston et assurant le blocage en rotation de la douille par rapport au piston et lesdites extensions axiales s'étendent de la périphérie radialement extérieure du plateau en direction de la tête de l'organe d'entrainement.

De manière très avantageuse, les moyens sont réalisés par découpage, pliage et emboutissage à partir d'une tôle. La fabrication est très simple. En outre la masse de l'ensemble plateau et extensions est faible

En d'autres termes, on ajoute à la fonction d'anti-rotation la fonction d'anti-basculement. Le coût associé à cette fonction supplémentaire est très faible, voire nulle.

La présente invention a alors pour objet un mécanisme à liaison hélicoïdale pour piston de frein électromécanique configuré pour être monté dans ledit piston, comportant une douille et un organe d'entraînement coopérant par une liaison hélicoïdale d'axe longitudinal ledit organe d'entraînement comportant une tête et des moyens de blocage en rotation de ladite douille par rapport au piston autour de l'axe longitudinal et de maintien axial du mécanisme, lesdits moyens comportant un plateau fixé sur la douille et s'étendant orthogonalement à l'axe longitudinal. Les moyens de blocage en rotation et de maintien axial comportant au moins trois extensions axiales coopérant avec une paroi axiale du piston et au moins une forme radiale coopérant avec la paroi axiale du piston où lesdites extensions axiales s'étendent de la périphérie radialement extérieure du plateau en direction de la tête.

Dans un exemple de réalisation la au moins une forme radiale est portée par une extension axiale.

La au moins une forme radiale peut être une rainures ou une nervure s'étendant axialement le long d'une extension axiale.

Dans un autre exemple de réalisation, la au moins une forme radiale est une saillie ou un évidement dans le bord extérieur du plateau.

Dans un exemple avantageux, les moyens sont réalisés par découpage et pliage d'une tôle.

La présente invention a également pour objet un étrier de frein électromécanique comprenant un corps d'étrier comportant un logement renfermant un piston et un mécanisme à liaison hélicoïdale, ledit piston comportant un logement intérieur délimité par un fond et une paroi latérale, et un mécanisme selon l'invention, ladite paroi latérale comportant dans sa surface intérieure au moins une forme coopérant avec la forme radiale, ladite forme s'étendant axialement sur toute la dimension axiale de la surface intérieure de la paroi latérale.

La présente invention a également pour objet un frein à disque comprenant un étrier selon l'invention et un moteur électrique connecté à l'organe d'entraînement.

La présente invention a également pour objet un procédé de fabrication d'un mécanisme à liaison hélicoïdale selon l'invention, comportant :
a) fourniture d'une douille et d'un organe d'entraînement et assemblage de la douille et de l'organe d'entraînement,
b) découpage dans une tôle d'une forme comportant le plateau et des parties allongées,
c) déformation desdites parties allongées de sorte à former les extensions axiales et éventuellement la au moins une forme radiale,
d) fixation de ladite forme sur ladite douille.

Dans un exemple, ladite forme comporte au moins une forme radiale et des parties allongées tangentiel au plateau. L'étape c) peut comporte par exemple le pliage pour rabattre les parties allongées autour d'axes s'étendant radialement par rapport à l'axe longitudinal.

Dans un autre exemple, ladite forme comporte des parties allongées s'étendant radialement. L'étape c) comporte par exemple le pliage pour rabattre les parties allongées autour d'axes tangentiels à un cercle circonscrit au plateau et l'emboutissage d'au moins une partie allongée pour former la au moins une forme radiale.

### BRÈVE DESCRIPTION DES DESSINS

L'invention sera mieux comprise à l'aide de la description qui va suivre et des dessins en annexe, sur lesquels :
La figure 1 est une vue en coupe schématique d'un frein à disque électromécanique.
La figure 2 est une vue en perspective d'un mécanisme à liaison hélicoïdale selon un exemple de réalisation.
La figure 3 est une vue en coupe longitudinal partiel du mécanisme de la figure 2 monté dans un piston de frein à disque.
La figure 4 est une vue en perspective d'un mécanisme à liaison hélicoïdale selon un autre exemple de réalisation.
La figure 5 est une vue en perspective d'un mécanisme à liaison hélicoïdale selon un autre exemple de réalisation.

### EXPOSÉ DÉTAILLÉ DE MODES DE RÉALISATION PARTICULIERS

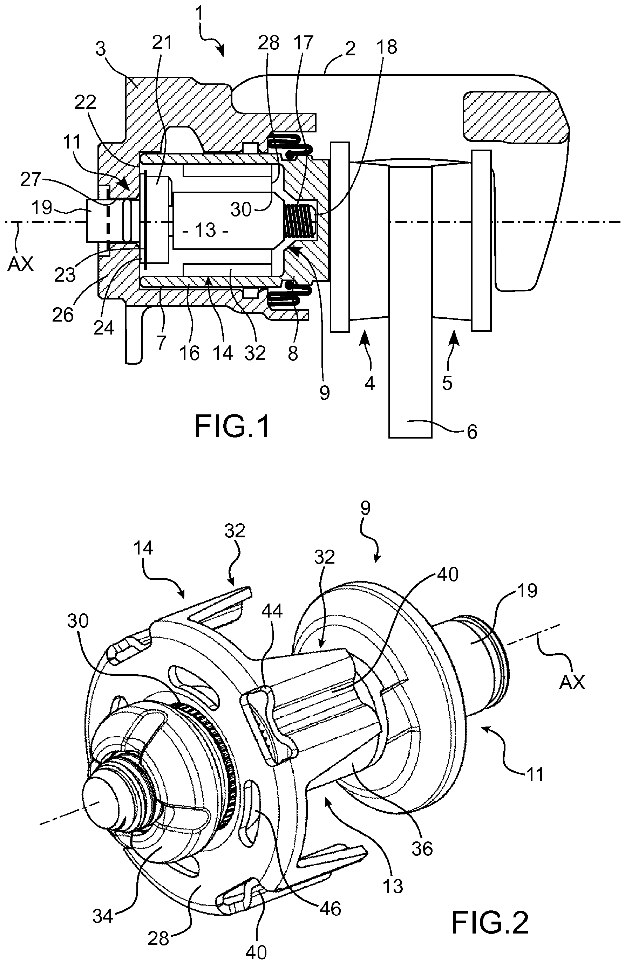

Sur la figure 1, on peut voir un frein à disque électromécanique repéré par 1 comprenant un étrier 2 comportant un corps d'étrier 3 portant deux plaquettes 4 et 5 enserrant un disque 6, ce corps d'étrier 3 étant équipé d'un actionneur électromécanique non représenté.

Le corps d'étrier comporte un logement cylindrique 7 s'étendant entre l'actionneur et l'une des plaquettes, dans lequel est logé un piston mobile 8 ayant sa tête en appui sur la plaquette 4, ce piston 8 étant mobile en translation selon une direction axiale AX et bloqué en rotation autour de l'axe AX par rapport au corps d'étrier 3.

Ce piston 8 est déplacé ou pressé contre la plaquette 4 par l'intermédiaire mécanisme 9 à liaison hélicoïdale qui est accouplé à l'actionneur non représenté, le mécanisme de liaison hélicoïdale 9 étant logé principalement dans le piston 8.

Ce mécanisme à liaison hélicoïdale 9 comprend un entraîneur ou organe d'entraînement 11 vissé dans une douille 13 qui porte des moyens 14 de blocage en rotation de cette douille 13 par rapport au piston 8 et de maintien du mécanisme aligné avec l'axe AX du piston. Comme visible sur la figure 1, la douille 13 et les moyens 14 sont situées dans l'espace interne délimité par la jupe cylindrique 16 du piston 8.

L'organe d'entraînement 11 comprend plus particulièrement un corps fileté 17 ayant une extrémité libre 18 et une extrémité d'accouplement 19 à l'actionneur non représenté, ainsi qu'une tête 21 située au voisinage de l'extrémité d'accouplement 19.

La tête 21 a une forme générale de plaque circulaire d'épaisseur significative ayant un diamètre externe inférieur au diamètre interne de la jupe 16. Cette tête 21 comporte une face d'appui 23 orientée du côté de l'extrémité d'accouplement 19, et par laquelle elle est en appui contre un fond plan 22 du logement cylindrique 7, par l'intermédiaire d'une rondelle d'appui 24.

Comme visible sur la figure 1, l'extrémité d'accouplement 19 traverse de manière étanche une paroi 26 du corps d'étrier 3 délimitant le fond 22, via un trou 27 formé dans cette paroi 26, pour permettre l'accouplement de l'arbre de sortie de l'actionneur non représenté à cette extrémité 19 qui dépasse ainsi hors du corps d'étrier 3. Par exemple, l'extrémité 19 comporte une empreinte en creux de type à six pans, dans laquelle s'engage une extrémité de l'arbre de sortie de l'actionneur qui est rapporté contre le corps d'étrier 3 sur la face externe de la paroi 26. Ce type de liaison n'est pas limitatif.

Une rotation dans le sens de serrage de l'organe d'entraînement 11, répondant à une commande de frein de parc, permet d'écarter la douille 13 de la tête 21 pour qu'elle presse le piston 8 contre la plaquette 4 afin de générer un couple de freinage. Inversement une rotation en sens de desserrage, répondant à une commande de relâchement du frein de parc, rapproche la douille 13 de la tête 21 pour réduire et annuler le couple de freinage.

Le logement 7 ainsi que le mécanisme 9 baignent par ailleurs dans du liquide. Une augmentation de la pression de ce liquide, répondant à une commande d'actionnement du frein de service, presse ainsi le piston contre la plaquette 4 pour générer un couple de freinage. Inversement, une diminution de la pression, répondant à une commande de relâchement du frein de service, réduit la pression exercée par le piston sur la plaquette 4 pour réduire voire annuler le couple de freinage.

Sur la figure 2, on peut voir un exemple de réalisation des moyens 14.

Les moyens 14 comportent un plateau 28 comprenant une ouverture centrale 30 montée autour de la douille 13 et des extensions axiales 32 s'étendant de la périphérie radialement extérieure du plateau 28 en direction de la tête 21. Le plateau est immobile en rotation par rapport à la douille, par exemple par sertissage. Avantageusement, la douille comporte des rainures axiales améliorant l'immobilisation en rotation.

Dans l'exemple représenté, la douille 13 comporte une tête 34 et un corps 36 portant le taraudage et dans lequel pénètre l'organe d'entraînement fileté.

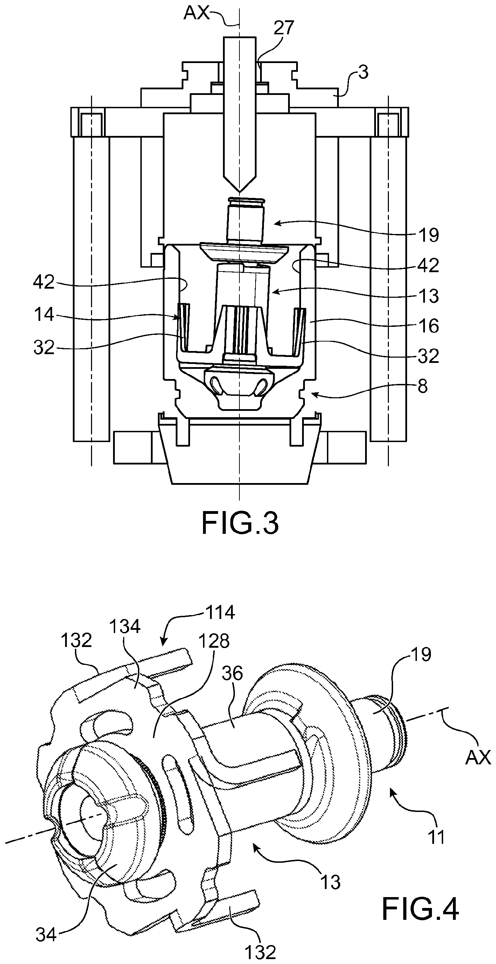

Les extensions axiales comportent des rainures axiales 40 destinées à coopérer avec des nervures axiales 42 (figure 3) portées par la paroi intérieure de la jupe du piston 8 et améliorant par coopération l'immobilisation du plateau et donc de la douille par rapport au piston. En variante, les extensions axiales 40 comportent des nervures et la jupe comportent des rainures. Le diamètre extérieure des du cercle circonscrit aux extensions axiales est sensiblement égale ou inférieure au diamètre intérieur du piston pour assurer une insertion du mécanisme dans le piston tout en assurant un alignement entre le mécanisme et l'axe du piston. Il sera compris que l'alignement du mécanisme avec l'axe du piston peut ne pas être très précis, une tolérance est admise au vu des jeux de fabrication.

En variante, une partie seulement des extensions axiales comporte une nervure ou une rainure coopérant avec le piston, par exemple une seule nervure ou rainure qui est suffisante pour bloquer en rotation la douille par rapport au piston.

Dans l'exemple représenté, les moyens 14 comporte quatre extensions axiales 32. En variante les moyens 14 comportent trois extensions axiales ou plus de quatre extensions axiales. De préférence, les extensions axiales sont réparties angulairement de manière régulière autour du plateau.

De manière très avantageuse, le plateau 28 et les extensions axiales 32 sont réalisés d'un seul tenant par découpage d'une tôle, pliage et/ou emboutissage d'une tôle d'acier.

La réalisation des moyens 14 est alors relativement simple et d'un coût de revient réduit.

Après découpage, les extensions s'étendent radialement par rapport au plateau, présentant une forme généralement en étoile à quatre branches.

Dans cet exemple, des découpes 44 sont réalisées au niveau du rattachement des extensions axiales 32 au plateau 28, réduisant la force requise au pliage et limitant l'apparition de « bourrelets de matière » lors du pliage.

Sur la figure 3, on peut voir le mécanisme de la figure 2 monté dans un piston, les extensions axiales 32 forment des jambes assurant l'alignement de la douille et de l'organe d'entraînement avec l'axe du piston.

Ainsi la suite de l'assemblage du frein est facilitée. En effet comme cela est schématisé sur la figure 3, lors du montage du piston dans le logement 7 de l'étrier, l'extrémité 19 de l'organe d'entraînement coulisse le long de l'axe longitudinal AX du logement 7 et est automatiquement aligné avec le trou 27 du corps d'étrier qui est aligné avec l'axe AX.

En variante, l'immobilisation en rotation es obtenue par des saillies radiales du plateau s'étendant dans le plan du plateau et coopérant avec des rainures axiales dans le piston, et le maintien de l'alignement est obtenu par des extensions axiales, présentant en coupe transversale au forme d'arc de rayon correspond au rayon intérieur du manteau du piston.

Sur la figure 4, on peut voir un autre exemple de réalisation des moyens 114 dans lequel, après découpage, les extensions 132 s'étendent sensiblement tangentiellement par rapport à un cercle centré sur l'axe longitudinal.

Lors du pliage chaque extension axiale 132 est repliée, en rapprochement de l'axe longitudinal, autour d'un axe sensiblement radial, contrairement aux extensions de la figure 2 qui sont repliées chacune autour d'un axe tangent à un cercle circonscrit au plateau.

En outre dans cet exemple, le blocage en rotation de la douille par rapport au piston est obtenu au moyen de saillies radiales 134 portées par le plateau coopérant avec des rainures axiales portées par la surface intérieure de la jupe du piston. En variante les extensions 132 pourraient être telles qu'elles assurent également le blocage en rotation.

Dans cet exemple, les faces des extensions axiales coopérant avec la surface intérieure de la jupe du piston sont planes.

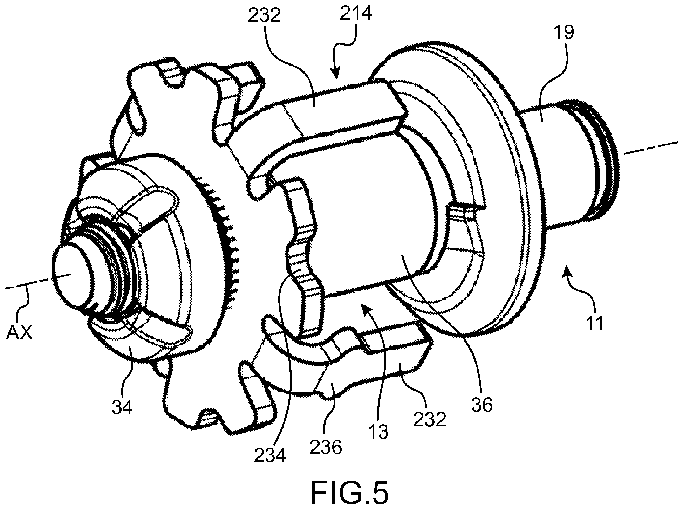

Sur la figure 5, on peut voir un autre exemple de réalisation de moyens 214 dans lequel, après découpage, les extensions 232 s'étendent sensiblement radialement.

Lors du pliage, chaque extension axiale 232 est repliée en rapprochement de l'axe longitudinal autour d'un axe tangent à un cercle centré sur l'axe longitudinal.

Le blocage en rotation de la douille par rapport au piston est amélioré au moyen d'évidements radiaux ou renfoncement radiaux 234 portés par le plateau coopérant avec des nervures axiales portées par la surface intérieure de la jupe du piston. Les évidements radiaux sont obtenus par découpe. En variante les extensions 232 pourraient être telles qu'elles assurent également le blocage en rotation.

Dans cet exemple, les faces des extensions axiales coopérant avec la surface intérieure de la jupe du piston sont planes.

Dans l'exemple de la figure 5, quatre extensions longitudinales 232 sont prévues. En outre, deux extensions sur quatre comportent sensiblement à mi-longueur une zone élargie 236, i.e. qui présente une dimension transversale plus grande que la dimension transversale du reste de l'extension. L'élargissement est disposé dans le plan de l'extension longitudinale.

Cet exemple de réalisation présente l'avantage de présenter une masse réduite, réduisant le poids non suspendu et favorisant la stabilité du véhicule.

De manière très avantageuse les moyens 14, 114, 214 sont réalisés par découpage et pliage et/ou emboutissage d'une tôle d'acier.

Le rapport entre la longueur des extensions axiales et la longueur du piston et/ou du mécanisme à liaison hélicoïdale est avantageusement compris entre ¼ et %, de préférence de l'ordre de ½.

Dans l'exemple représenté, toutes les extensions axiales ont la même longueur. En variante, elles présentent des longueurs différentes.

Un exemple de procédé d'assemblage va maintenant être décrit.

Considérons le mécanisme de la figure 2 :
L'organe d'entraînement est vissé dans la douille 13 formant ainsi le mécanisme à liaison hélicoïdale.

Le mécanisme à liaison hélicoïdale est ensuite inséré dans le piston en alignant les extensions axiales avec les nervures de la jupe du piston. Le mécanisme est ensuite coulissé dans le piston. La coopération des extensions axiales avec la jupe du piston assure une immobilisation en rotation de la douille et un maintien de l'alignement entre l'organe d'entraînement et l'axe du piston.

Lors d'une étape suivante, le piston équipé du mécanisme à liaison hélicoïdale est inséré dans l'alésage de l'étrier. Celui-ci est coulissé dans l'alésage. Du fait du l'alignement de l'organe d'entraînement avec l'axe du piston et donc l'axe de l'alésage, l'extrémité 19 de l'organe d'entraînement 11 est aligné avec le trou 27 dans l'étrier et pénètre dans celui-ci naturellement. Ensuite le moteur électrique est monté sur l'extérieur de l'étrier, et son arbre est connecté à l'extrémité 19 de l'organe d'entraînement.

Grâce à l'invention, le montage est simplifié, et peut être automatisé.

### Nomenclature :

1 frein
2 étrier
3 corps d'étrier
4 plaquette
5 plaquette
6 disque
7 logement
8 piston
9 mécanisme
11 entraîneur
13 douille
14 moyens de blocage en rotation et de maintien axial
16 jupe
17 corps fileté
18 extrémité libre
19 extrémité d'accouplement
21 tête
22 fond plan
23 face d'appui
24 rondelle d'appui
26 paroi
27 trou
28 plateau
30 ouverture centrale
32 extension axiale
34 tête
36 corps
40 rainure axiale

42 nervure axiale
44 découpe
46 trou du plateau
114, 214 moyens de blocage en rotation et de maintien axial
128 plateau
132, 232 extension axiale
134 extension radiale
234 évidement radial
236 zone élargie

## Revendications

1. Mécanisme à liaison hélicoïdale pour piston de frein électromécanique configuré pour être monté dans ledit piston (8), comportant une douille (13) et un organe d'entraînement (9) coopérant par une liaison hélicoïdale d'axe longitudinal (AX), ledit organe d'entraînement comportant une tête (21) et des moyens (14, 114) de blocage en rotation de ladite douille par rapport au piston autour de l'axe longitudinal (AX) et de maintien axial du mécanisme, lesdits moyens de blocage en rotation et de maintien axial comportant un plateau (28, 128) fixé sur la douille (13) et s'étendant orthogonalement à l'axe longitudinal (AX), lesdits moyens de blocage en rotation et de maintien axial comportant au moins une forme radiale (40, 134) apte à coopérer avec la paroi axiale du piston, **caractérisé en ce que** les moyens de blocage en rotation et de maintien axial comportent en outre: au moins trois extensions axiales (32, 132) apte à coopérer avec une paroi axiale du piston, lesdites extensions axiales (32, 132) s'étendant de la périphérie radialement extérieure du plateau (28, 128) en direction de la tête (21).

2. Mécanisme à liaison hélicoïdale selon la revendication 1, dans lequel la au moins une forme radiale (40) est portée par une extension axiale (32).

3. Mécanisme à liaison hélicoïdale selon la revendication 2, dans lequel la au moins une forme radiale (40) est une rainures ou une nervure s'étendant axialement le long d'une extension axiale (32).

4. Mécanisme à liaison hélicoïdale selon la revendication 1, dans lequel la au moins une forme radiale (134) est une saillie ou un évidement dans le bord extérieur du plateau (128).

5. Mécanisme à liaison hélicoïdale selon l'une des revendications 1 à 4, dans lequel les moyens (14, 114) sont réalisés par découpage et pliage d'une tôle.

6. Etrier (2) de frein électromécanique (1) comprenant un corps d'étrier (3) comportant un logement (7) renfermant un piston (8) et un mécanisme à liaison hélicoïdale, ledit piston comportant un logement intérieur délimité par un fond et une paroi latérale (16), et un mécanisme selon l'une des revendications 1 à 5, ladite paroi latérale comportant dans sa surface intérieure au moins une forme (42) coopérant avec la forme radiale (40, 134), ladite forme s'étendant axialement sur toute la dimension axiale de la surface intérieure de la paroi latérale (16).

7. Frein à disque comprenant un étrier selon la revendication 6, et un moteur électrique connecté à l'organe d'entraînement.

8. Procédé de fabrication d'un mécanisme à liaison hélicoïdale selon l'une des revendications 1 à 5, comportant :
a) fourniture d'une douille (13) et d'un organe d'entraînement (11) et assemblage de la douille (13) et de l'organe d'entraînement (11),
b) découpage dans une tôle d'une forme comportant le plateau (28, 128) et des parties allongées,
c) déformation desdites parties allongées de sorte à former les extensions axiales (32, 132) et éventuellement la au moins une forme radiale (40),
d) fixation de ladite forme sur ladite douille (13).

9. Procédé de fabrication selon la revendication précédente, ladite forme comportant au moins une forme radiale et des parties allongées tangentiel au plateau.

10. Procédé de fabrication selon la revendication précédente, dans lequel l'étape c) comporte le pliage pour rabattre les parties allongées autour d'axes s'étendant radialement par rapport à l'axe longitudinal (AX).

11. Procédé de fabrication selon la revendication 8, dans lequel ladite forme comporte des parties allongées s'étendant radialement.

12. Procédé de fabrication selon la revendication précédente, dans lequel l'étape c) comporte le pliage pour rabattre les parties allongées autour d'axes tangentiels à un cercle circonscrit au plateau et l'emboutissage d'au moins une partie allongée pour former la au moins une forme radiale.

## Patentansprüche

1. Schraubverbindungsmechanismus für einen elektromechanischen Bremskolben, der dafür konfiguriert ist, in dem Kolben (8) montiert zu werden und eine Buchse (13) und ein Antriebsorgan (9) umfasst, die über eine Schraubverbindung mit einer Längsachse (AX) zusammenwirken, wobei das Antriebsorgan einen Kopf (21) und Mittel (14, 114) zur Drehsicherung der Buchse in Bezug auf den Kolben um die Längsachse (AX) und zum axialen Halten des Mechanismus umfasst, wobei die Drehsicherungs- und axialen Haltemittel eine Platte (28, 128) umfassen, die an der Buchse (13) befestigt ist und sich orthogonal zur Längsachse (AX) erstreckt, wobei die Drehsicherungs- und axialen Haltemittel mindestens eine radiale Form (40, 134) umfassen, die in der Lage ist, mit der axialen Wand des Kolbens zusammenzuwirken, **dadurch gekennzeichnet, dass** die Drehsicherungs- und axialen Haltemittel weiter umfassen: mindestens drei axiale Erstreckungen (32, 132), die in der Lage sind, mit einer axialen Wand des Kolbens zusammenzuwirken, wobei sich die axialen Erstreckungen (32, 132) vom radial äußeren Umfang der Platte (28, 128) in Richtung des Kopfes (21) erstrecken.

2. Schraubverbindungsmechanismus nach Anspruch 1, wobei die mindestens eine radiale Form (40) von einer axialen Erstreckung (32) getragen wird.

3. Schraubverbindungsmechanismus nach Anspruch 2, wobei die mindestens eine radiale Form (40) eine Nut oder eine Rippe ist, die sich axial entlang einer axialen Erstreckung (32) erstreckt.

4. Schraubverbindungsmechanismus nach Anspruch 1, wobei die mindestens eine radiale Form (134) ein Vorsprung oder eine Aussparung in der Außenkante der Platte (128) ist.

5. Schraubverbindungsmechanismus nach einem der Ansprüche 1 bis 4, wobei die Mittel (14, 114) durch Ausschneiden und Biegen eines Blechs hergestellt sind.

6. Bremssattel (2) für eine elektromechanische Bremse (1), der einen Bremssattelkörper (3), der eine Aufnahme (7) umfasst, die einen Kolben (8) und einen Schraubverbindungsmechanismus umschließt, wobei der Kolben eine innere Aufnahme umfasst, die von einem Boden und einer Seitenwand (16) begrenzt wird, und einen Mechanismus nach einem der Ansprüche 1 bis 5 umfasst, wobei die Seitenwand an ihrer Innenfläche mindestens eine Form (42) umfasst, die mit der radialen Form (40, 134) zusammenwirkt, wobei sich die Form axial über die gesamte axiale Abmessung der Innenfläche der Seitenwand (16) erstreckt.

7. Scheibenbremse, die einen Bremssattel nach Anspruch 6 und einen Elektromotor umfasst, der mit dem Antriebsorgan verbunden ist.

8. Herstellungsverfahren für einen Schraubverbindungsmechanismus nach einem der Ansprüche 1 bis 5, umfassend:
a) Bereitstellen einer Buchse (13) und eines Antriebsorgans (11) und Zusammenbauen der Buchse (13) und des Antriebsorgans (11),
b) Ausschneiden einer Form, die die Platte (28, 128) und längliche Teile umfasst, aus einem Blech,
c) Verformen der länglichen Teile, um die axialen Erstreckungen (32, 132) und gegebenenfalls die mindestens eine radiale Form (40) zu bilden,
d) Befestigen der Form an der Buchse (13).

9. Herstellungsverfahren nach dem vorstehenden Anspruch, wobei die Form mindestens eine radiale Form und längliche Teile umfasst, die tangential zur Platte verlaufen.

10. Herstellungsverfahren nach dem vorstehenden Anspruch, wobei Schritt c) das Biegen umfasst, um die länglichen Teile um Achsen umzuschlagen, die sich radial in Bezug auf die Längsachse (AX) erstrecken.

11. Herstellungsverfahren nach Anspruch 8, wobei die Form längliche Teile umfasst, die sich radial erstrecken.

12. Herstellungsverfahren nach dem vorstehenden Anspruch, wobei Schritt c) das Biegen, um die länglichen Teile um Achsen umzuschlagen, die tangential zu einem Kreis verlaufen, der an der Platte umschrieben ist, und das Tiefziehen mindestens eines länglichen Teils umfasst, um die mindestens eine radiale Form zu bilden.

## Claims

1. A helical connection mechanism for an electromechanical brake piston configured to be mounted in said piston (8), comprising a sleeve (13) and a drive member (9) cooperating by a helical connection of longitudinal axis (AX), said drive member comprising a head (21) and means (14, 114) for rotationally locking said sleeve relative to the piston about the longitudinal axis (AX) and for axially holding the mechanism, said rotational locking and axial holding means comprising a plate (28, 128) attached to the sleeve (13) and extending orthogonally to the longitudinal axis (AX), said rotational locking and axial holding means comprising at least one radial shape (40, 134) cooperating with the axial wall of the piston, **characterised in that** the rotational locking and axial holding means further comprise at least three axial extensions (32, 132) cooperating with an axial wall of the piston, said axial extensions (32, 132) extending from the radially external periphery of the plate (28, 128) towards the head (21).

2. The helical connection mechanism according to claim 1, wherein the at least one radial shape (40) is carried by an axial extension (32).

3. The helical connection mechanism according to claim 2, wherein the at least one radial shape (40) is a groove or rib axially extending along an axial extension (32).

4. The helical connection mechanism according to claim 1, wherein the at least one radial shape (134) is a projection or recess in the external edge of the plate (128).

5. The helical connection mechanism according to one of claims 1 to 4, wherein the means (14, 114) are made by cutting and bending a metal sheet.

6. A caliper (2) for an electromechanical brake (1) comprising a caliper body (3) comprising a housing (7) enclosing a piston (8) and a helical connection mechanism, said piston comprising an internal housing delimited by a bottom and a side wall (16), and a mechanism according to one of claims 1 to 5, said side wall having in its internal surface at least one shape (42) cooperating with the radial shape (40, 134), said shape axially extending over the whole axial dimension of the internal surface of the side wall (16).

7. A disc brake comprising a caliper according to claim 6, and an electric motor connected to the drive member.

8. A method for manufacturing a helical connection mechanism according to one of claims 1 to 5, comprising:
a) providing a sleeve (13) and a drive member (11) and assembling the sleeve (13) and the drive member (11),
b) cutting from a metal sheet a shape comprising the plate (28, 128) and elongated parts,
c) deforming said elongated parts so as to form the axial extensions (32, 132) and optionally the at least one radial shape (40),
d) attaching said shape to said sleeve (13).

9. The manufacturing method according to the preceding claim, said shape including at least one radial shape and elongated parts tangential to the plate.

10. The manufacturing method according to the preceding claim, wherein step c) includes bending to fold down the elongated parts about axes extending radially relative to the longitudinal axis (AX).

11. The manufacturing method according to claim 8, wherein said shape includes elongated parts extending radially.

12. The manufacturing method according to the preceding claim, wherein step c) comprises bending to fold down the elongated parts about axes tangential to a circle circumscribed by the plate and stamping at least one elongated part to form the at least one radial shape.
